# EUROPEAN PATENT APPLICATION

(11) **EP 4 852 072 A1**
(43) Date of publication of application: **09.12.2026**
(21) Application number: 25748434.5
(22) Date of filing: 09.01.2025
(51) Int. Cl.: H01M 4/13, H01M 4/134, H01M 4/38, H01M 4/62, H01M 10/052

(54) **NON-AQUEOUS ELECTROLYTE SECONDARY BATTERY**

(30) Priority: 30.01.2024 JP 2024011916
(71) Applicant: Panasonic Intellectual Property Management Co., Ltd., Kadoma-shi, Osaka 571-0057 (JP)
(72) Inventor: YAMAMOTO, Takashi, Kadoma-shi, Osaka 571-0057 (JP)
(74) Representative: Novagraaf International SA
(86) International application number: PCT/JP2025/000547
(87) International publication number: WO 2025/164252

(57) **Abstract**

A nonaqueous electrolyte secondary battery includes a positive electrode, a negative electrode, and a nonaqueous electrolyte. The positive electrode includes a positive electrode current collector, and a positive electrode mixture layer supported on the positive electrode current collector. The positive electrode mixture layer contains a positive electrode active material and a fluorine-containing sulfonic acid compound. The ratio of the mass of the fluorine-containing sulfonic acid compound, relative to the total mass of the positive electrode active material and the fluorine-containing sulfonic acid compound in the positive electrode mixture layer is 1.5 mass% or less.

## Description

### [Cross Reference to Related Application]

The present disclosure claims priority with respect to the Japanese Patent Application No. 2024-011916 filed on January 30, 2024, and the entire content of the patent application is incorporated herein by reference into the present specification.

### [Technical Field]

The present disclosure relates to a nonaqueous electrolyte secondary battery.

### [Background Art]

Patent Literature 1 proposes an electrode for a lithium-ion battery, comprising a sulfonic acid compound containing a sulfonic acid anion represented by a formula (1): R-SO₃⁻ and a Mn cation, wherein in the formula (1), R is an alkyl group having 1 to 5 carbon atoms that may be substituted by a fluorine atom, an alkenyl group having 2 to 5 carbon atoms that may be substituted by a fluorine atom, an alkynyl group having 2 to 5 carbon atoms that may be substituted by a fluorine atom, or an aryl group that may be substituted by a fluorine atom.

### [Citation List]

### [Patent Literature]

Patent Literature 1: Japanese Patent No. 7113995

### [Summary of Invention]

### [Technical Problem]

In nonaqueous electrolyte secondary batteries, the heat generation rate when an abnormality such as internal short circuit occurs is high. One of the objectives of the present disclosure is to suppress the heat generation in the event of an abnormality in a nonaqueous electrolyte secondary battery.

### [Solution to Problem]

The present disclosure relates to a nonaqueous electrolyte secondary battery, including: a positive electrode, a negative electrode, and a nonaqueous electrolyte, wherein the positive electrode includes a positive electrode current collector, and a positive electrode mixture layer supported on the positive electrode current collector, the positive electrode mixture layer contains a positive electrode active material and a fluorine-containing sulfonic acid compound, and a ratio of a mass of the fluorine-containing sulfonic acid compound, relative to a total mass of the positive electrode active material and the fluorine-containing sulfonic acid compound in the positive electrode mixture layer is 1.5 mass% or less.

### [Advantageous Effects of Invention]

According to the nonaqueous electrolyte secondary battery of the present disclosure, the heat generation rate during an abnormality can be reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

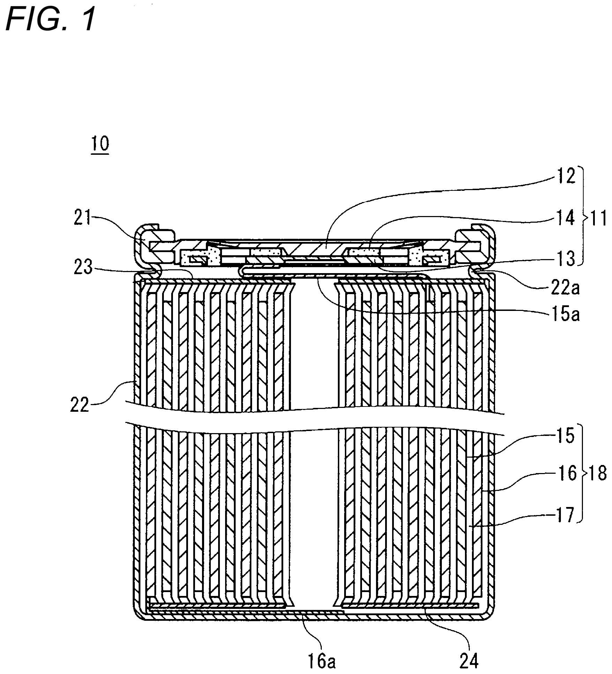

[FIG. 1] A schematic longitudinal sectional view of an example of a nonaqueous electrolyte secondary battery according to an embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, unless otherwise specified, one kind of the mentioned examples may be selected and used singly, or two or more kinds of the mentioned examples may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

Nonaqueous electrolyte secondary batteries include lithium-ion secondary batteries using a liquid nonaqueous electrolyte, solid-state batteries containing a gel electrolyte, all-solid-state batteries using a solid electrolyte, and secondary batteries (metal secondary batteries) using a consumable metal negative electrode (e.g., a negative electrode including lithium metal).

A nonaqueous electrolyte secondary battery includes a positive electrode, a negative electrode, and a nonaqueous electrolyte. A separator is usually disposed between the positive electrode and the negative electrode.

### (Positive electrode)

The positive electrode according to the present disclosure includes a positive electrode current collector and a positive electrode mixture. The positive electrode mixture contains a positive electrode active material and a fluorine-containing sulfonic acid compound (hereinafter may be referred to as a "compound FS"). The positive electrode mixture may further contain a binder, a conductive material, and the like. The positive electrode mixture is supported on the positive electrode current collector, forming a positive electrode mixture layer. The positive electrode mixture layer may be formed in the form of a film on a surface of the positive electrode current collector.

The compound FS has a function of readily carbonizing when the battery temperature rises due to the occurrence of an abnormality such as an internal short circuit, to suppress a further increase of the heat generation rate. This can significantly improve the safety of the nonaqueous electrolyte secondary battery in the event of an abnormality. The residue of the carbonized compound FS is a carbonized product with low flammability and is considered to act as a flame retardant. The carbonized product adheres to the surface of the positive electrode active material and suppresses the release of oxygen due to the decomposition of the positive electrode.

In the process of forming a positive electrode mixture layer, the compound FS and particles of the positive electrode active material particles are allowed to be mixed in the positive electrode mixture layer. In this case, the compound FS can cover at least part of the surface of the positive electrode active material uniformly to some extent. Therefore, the effect of suppressing the increase of the heat generation rate is exerted even with a very small amount of the compound FS.

The ratio of the mass of the compound FS (hereinafter may be referred to as a "compound FS content"), relative to the total mass of the positive electrode active material and the compound FS in the positive electrode mixture layer (i.e., the positive electrode mixture) is sufficient when it is 1.5 mass% or less. The compound FS content may be 1.0 mass% or less, may be 0.5 mass% or less, may be 0.2 mass% or less, and may be 0.1 mass% or less. From the viewpoint of obtaining a high effect of the compound FS, the compound FS content may be 0.01 mass% or more, may be 0.03 mass% or more, and may be 0.05 mass% or more. The compound FS content, for example, may be 0.01 mass% or more and 1.5 mass% or less, may be 0.05 mass% or more and 1.5 mass% or less, and may be 0.01 mass% or more and 1.0 mass% or less.

Such a small amount of the compound FS further has a function of improving the initial charge-discharge efficiency of the secondary battery. The compound FS is presumed to act to make uniform the movement of lithium ions from the positive electrode during charging. When the positive electrode mixture layer contains the compound FS, a uniform reaction is likely to proceed at the negative electrode, too. As a result, the initial charge-discharge efficiency can be improved.

In the nonaqueous electrolyte secondary battery, a coating film called a solid electrolyte interphase (SEI) is formed on the surface of the active material during initial charging and discharging. The compound FS is considered to be involved in the formation of a SEI film with good quality.

In the case where the compound FS content is more strictly controlled, the compound FS can exert a function of reducing the internal resistance of the nonaqueous electrolyte secondary battery. The formation of a SEI film with good quality can suppress the fluctuations and the non-uniformity of the conductive network within the positive electrode mixture layer, leading to reduced internal resistance. For example, when the compound FS content is less than 0.2 mass%, the internal resistance reduction effect is likely to be increased.

### (Specific examples of compound FS)

The compound FS may include, for example, a sulfonic acid anion represented by a formula (1): R-SO₃⁻.

In the formula (1), R is not particularly limited, and may be, for example, an alkyl group, an alkenyl group, or an alkynyl group. In particular, an alkyl group having 1 to 5 carbon atoms, an alkenyl group having 2 to 5 carbon atoms, or an alkynyl group having 2 to 5 carbon atoms is preferred in terms of suppressing the increase in internal resistance and being easily carbonized. Here, in each of the alkyl group having 1 to 5 carbon atoms, the alkenyl group having 2 to 5 carbon atoms, and the alkynyl group having 2 to 5 carbon atoms, at least one hydrogen atom is substituted by a fluorine atom. That is, the alkyl group having 1 to 5 carbon atoms is a fluoroalkyl group, the alkenyl group having 2 to 5 carbon atoms is a fluoroalkenyl group, and the alkynyl group having 2 to 5 carbon atoms is a fluoroalkynyl group. The fluoroalkyl group, the fluoroalkenyl group, and the fluoroalkynyl group may be each independently linear or branched.

Examples of the alkyl group serving as the base for the fluoroalkyl group having 1 to 5 carbon atoms include methyl, ethyl, n-propyl, isopropyl, n-butyl, isobutyl, t-butyl, n-pentyl, and t-pentyl groups. In particular, methyl, ethyl, n-propyl, and n-butyl groups are preferred. Considering the balance between the internal resistance of the secondary battery and the suppressing the increase of the heat generation rate due to the formation of a carbonized product, the number of carbon atoms is preferably 2 to 4, and a butyl group (esp. n-butyl group) is particularly preferred. In the alkyl group, the ratio of the hydrogen atoms substituted by a fluorine atom is preferably 100% (a perfluoroalkyl group is preferred). The ratio of the hydrogen atoms substituted by a fluorine atoms may be 30 atom% or more, may be 50 atom% or more, and may be 80 atom% or more.

Examples of the alkenyl group serving as the base for the fluoroalkenyl group having 2 to 5 carbon atoms include vinyl, allyl, propenyl, isopropenyl, 1-butenyl, 2-butenyl, 3-butenyl, isobutenyl, and 1-propenyl groups. In particular, vinyl, allyl, propenyl, and butenyl groups are preferred. In the alkenyl group, the ratio of the hydrogen atoms substituted by a fluorine atom is preferably 100%, which may be 30 atom% or more, may be 50 atom% or more, and may be 80 atom% or more.

Examples of the alkynyl group serving as the base for the fluoroalkynyl group having 2 to 5 carbon atoms include 1-propynyl, 2-propynyl, 1-butynyl, 2-butynyl, and 3-butynyl groups. In the alkynyl group, the ratio of the hydrogen atoms substituted by a fluorine atom is preferably 100%, which may be 30 atom% or more, may be 50 atom% or more, and 80 atom% or more.

A preferred example of the sulfonic acid anion is a nonafluorobutanesulfonate ion (nonafluorobutanesulfonic acid anion (C₄F₉-SO₃⁻)). However, any sulfonic acid anion having a similar molecular weight and structure thereto is considered to be excellent in the balance between the internal resistance of the secondary battery and the suppressing the increase of the heat generation rate due to the formation of a carbonized product.

The compound FS may be a salt of a sulfonic acid anion and a cation. The cation may be of any type, and is preferably, for example, an alkali metal ion and an alkaline earth metal ion, in terms of their excellent stability in the nonaqueous electrolyte. That is, the compound FS may be at least one selected from the group consisting of a fluorine-containing sulfonic acid alkali metal salt and a fluorine-containing sulfonic acid alkaline earth metal salt (hereinafter may be referred to as a "compound FS alkali (alkaline earth) metal salt"). The compound FS alkali (alkaline earth) metal salt may account for 50 mass% or more of the compound FS, and may be account for 80 mass% or more of the compound FS, and 100% of the compound FS may be the compound FS alkali (alkaline earth) metal salt.

Among the cations that constitute the compound FS alkali (alkaline earth) metal salt, alkali metal ions are particularly preferred in terms of their excellent stability in the nonaqueous electrolyte. Preferred examples of the compound FS include a fluorine-containing potassium sulfonate salt, a fluorine-containing lithium sulfonate salt, and a fluorine-containing sodium sulfonate salt. For example, a fluorine-containing potassium sulfonate salt (e.g., R-SO₃K, such as C₄F₉-SO₃K) is excellent in the balance between the internal resistance of the secondary battery and the suppressing the increase of the heat generation rate due to the formation of a carbonized product.

When a fluorine-containing potassium sulfonate salt is used as at least part of the compound FS, the potassium ion content in the positive electrode mixture layer is preferably 0.0005 mass% or more and 0.2 mass% or less, and may be 0.0005 mass% or more and 0.01 mass% or less.

### (Positive electrode active material)

Preferred examples of the positive electrode active material include a lithium-containing composite oxide containing at least Ni. From the viewpoint of achievement of high capacity, in the lithium-containing composite oxide, the proportion of Ni in the metal elements except Li is preferably 80 atom% or more. In particular, the lithium-containing composite oxide is preferably a lithium-nickel oxide (composite oxide N) containing Li and Ni in which the proportion of Ni in the metal elements except Li is 80 atom% or more, and having a layered rock-salt type crystal structure. The proportion of Ni in the metal elements except Li may be 88 atom% or more, may be 90 atom% or more, and may be 95 atom% or more. In the composite oxide N, the proportion of Ni in the metal elements except Li is less than 100 atom%, may be 99 atom% or less, and may be 98 atom% or less.

Although the positive electrode active material may contain other materials, the proportion of the composite oxide N in the positive electrode active material is, for example, 70 mass% or more, which may be 90 mass% or more, may be 95 mass% or more, and may be 100%.

The composite oxide N may further contain Co and Mn. Co and Mn contribute to stabilizing the crystal structure of the composite oxide N.

From the viewpoint of cost reduction and achievement of high capacity, the proportion of Co in the metal elements except Li contained in the composite oxide N is desirably 0 atom% or more and 20 atom% or less, and more desirably more than 0 atom% and 5 atom% or less.

From the viewpoint of cost reduction, the proportion of Mn in the metal elements except Li contained in the composite oxide N may be 1 atom% or more and 10 atom% or less, may be 2 atom% or more and 5 atom% or less, and may be 3 atom% or more and 5 atom% or less.

The composite oxide N may further contain Al. Al contributes to stabilizing the crystal structure of composite oxide N. Since the alkalinity of the composite oxide N containing Co, Mn, and Al is very high, the role of the organic additive is particularly important.

The proportion of Al in the metal elements except Li contained in the composite oxide N may be 0.1 atom% or more and 5 atom% or less, may be 0.2 atom% or more and 3 atom% or less, and may be 0.5 atom% or more and 1 atom% or less.

The composite oxide N may be represented by, for example, a formula: Li_{y}NiₓM₍₁₋ₓ₎O_{2-δ} where 0.8 ≤ x ≤ 1, 0 < y ≤ 1.2, and -0.05 ≤ δ ≤ 0.05. Here, the element M may include at least one element selected from the group consisting of Co, Mn, Al, Fe, Ti, Sr, Ca, Zr, W, and B. The symbol x representing the atomic ratio of Ni may be 0.98 or less, and may be 0.95 or less. The value of x increases or decreases during the charging and discharging of the secondary battery.

The element M may be represented by a formula: Co_{1-x-a-b}MnₐAl_{b} where 0 < a < 0.05 and 0 < b < 0.05.

The thickness of the positive electrode mixture layer is not particularly limited, and, for example, may be 50 µm or more and 150 µm or less, and may be 75 µm or more and 125 µm or less. A plurality of layers having different structures may be formed into a single positive electrode active material layer. For example, two or more layers containing positive electrode active materials differing in the average particle diameter may be stacked, and two or more layers differing in the kind or composition of the positive electrode active material may be stacked.

The average particle diameter (D50) of the composite oxide N particles is, for example, 1 µm or more and 50 µm or less, and may be 5 µm or more and 25 µm or less. The average particle diameter (D50) refers to a median diameter at a cumulative volume of 50% in a volume-based particle size distribution. The volume-based particle size distribution can be measured using a commercially available laser diffraction-scattering type particle size distribution analyzer.

### (Binder)

As the binder, for example, a fluorine-containing polymer, a hydrogenated nitrile butadiene rubber, and the like are preferred. A preferred example of the fluorine-containing polymer is a vinylidene fluoride-based polymer. Examples of the vinylidene fluoride-based polymer include a polymer of a monomer including vinylidene fluoride. The fluorine-containing polymer may be a combination of a vinylidene fluoride-based polymer and another fluorine-containing polymer. The vinylidene fluoride-based polymer may be a copolymer of vinylidene fluoride and another monomer. Examples of the vinylidene fluoride-based polymer include polyvinylidene fluoride (PVDF) and a vinylidene fluoride-hexafluoropropylene copolymer. The vinylidene fluoride-based polymer contains a monomer unit derived from vinylidene fluoride in a proportion of, for example, 50 mol% or more, and preferably in a proportion of 80 mol% or more.

In the positive electrode mixture layer, the amount of the binder relative to 100 parts by mass of the positive electrode active material may be 0.1 parts by mass or more, and may be 0.5 parts by mass or more. The amount of the binder relative to 100 parts by mass of the positive electrode active material may be 2.0 parts by mass or less, and may be 1.2 parts by mass or less.

### (Conductive material)

The conductive material that may be contained as an optional component in the positive electrode mixture layer is not particularly limited, and may be a known conductive material. In particular, a carbonaceous material having electrical conductivity is preferred. Examples of the carbonaceous material having electrical conductivity include conductive carbon particles, such as carbon black and graphite, carbon nanotubes (CNTs), and carbon fibers other than CNTs.

### (Positive electrode current collector)

The positive electrode current collector is constituted of a sheet-shaped conductive material. The positive electrode current collector may be a non-porous conductive substrate (metal foil, etc.), or a porous conductive substrate (mesh, net, punched sheet, etc.). The positive electrode mixture layer is supported in a film form on one or both surfaces of the positive electrode current collector. The material of the positive electrode current collector is not particularly limited, and stainless steel, aluminum, aluminum alloy, titanium, and the like can be used. The positive electrode current collector may be a laminated sheet including a resin film and a metal or alloy, such as stainless steel, aluminum, aluminum alloy, or titanium, laminated thereon. Examples of the resin material of the resin film include, but not limited to, polyester such as polyethylene terephthalate (PET) and polybutylene terephthalate (PBT), polyethylene, polypropylene, polyamide, and polyimide.

### (Production method of positive electrode)

An exemplary method for producing a positive electrode used in a nonaqueous electrolyte secondary battery according to the present disclosure (hereinafter may be referred to as a "production method (M)") will be described. The production method (M) includes a first step of preparing a positive electrode slurry, and a second step of forming a positive electrode mixture layer using the positive electrode slurry, on a surface of a positive electrode current collector. The second step includes a step of preparing a positive electrode current collector and forming an applied film of the positive electrode slurry on a surface of the positive electrode current collector, and a step of heating the applied film to dry.

The positive electrode slurry prepared in the first step of the production method (M) contains a liquid medium and a positive electrode mixture dispersed in the liquid medium. For the positive electrode mixture, the aforementioned positive electrode mixture is used. For example, the positive electrode slurry can be prepared by mixing a positive electrode active material, a binder, a compound FS, a conductive material, and a liquid medium together. The compound FS is desirably soluble in the liquid medium. The positive electrode slurry can be prepared by mixing the positive electrode mixture with a liquid medium. A solution of the compound FS dissolved in a liquid medium in advance may be mixed with the other components. The mixing method is not particularly limited, and any known mixing method may be used.

For the liquid medium, organic solvent or water can be used. As the organic solvent, N-methyl-2-pyrrolidone (NMP) is preferred, and alcohols such as ethanol, ethers such as tetrahydrofuran, amides such as dimethylformamide, and ketones such as cyclohexanone may also be used.

In the second step, the step of forming an applied film of the positive electrode slurry on a surface of the positive electrode current collector may be performed using, for example, a bar coater, gravure coater, blade coater, roll coater, comma coater, die coater, lip coater, or other coaters. A plurality of positive electrode slurries with different compositions may be prepared, and these slurries may be applied one on another in two or more layers.

In the second step, the drying of the applied film is preferably carried out at 200 °C or lower. For example, the applied film may be dried at a temperature of 150 °C to 190°C. Through the drying of the applied film, the liquid medium evaporates, and an unrolled applied film is formed.

Usually, this is followed by rolling of the unrolled applied film, and a positive electrode mixture layer is formed. The rolling conditions are not specifically limited. The density of the positive electrode active material in the positive electrode mixture layer is, for example, 3.3 g/cm³ or more and 4.0 g/cm³ or less, and may be 3.5 g/cm³ or more and 4.0 g/cm³ or less.

Depending on the battery structure, the positive electrode mixture layer may be formed on only one surface of the positive electrode current collector or on both surfaces of the positive electrode current collector.

### (Analysis)

Next, a description will be given below of the identification of the compound FS contained in the positive electrode mixture layer and the measurement of a compound FS content.

For the identification of the compound FS and the measurement of a compound FS content, by collecting the positive electrode from the battery in a discharged state, peeling the positive electrode mixture layer (positive electrode mixture) from the positive electrode current collector, and analyzing the compound FS separated from the positive electrode mixture, the identification and measurement can be done. In separating the compound FS, for example, a sample equivalent to 1.0 g of the positive electrode mixture is weighed, and mixed with 30 mL of NMP, which is shaken to dissolve for 30 seconds to allow the compound FS to be eluted, and is filtered, and then, an NMP solution containing the compound FS can be obtained.

As the analysis method, IR spectroscopic analysis (infrared spectroscopic analysis), UV spectroscopic analysis (ultraviolet-visible spectroscopic analysis), NMR analysis (nuclear magnetic resonance analysis), LC-MS (liquid chromatography-mass analysis), GC-MS (gas chromatography-mass analysis), ICP-AES (inductively coupled plasma atomic emission spectroscopic analysis), and like can be used. A cross section of the positive electrode mixture layer of the positive electrode collected from the battery in a discharged state may be analyzed using SEM-EDX (scanning electron microscopy-energy dispersive X-ray analysis), TOF-SIMS (time-of-flight secondary ion mass spectrometry), and the like. The cross section of the positive electrode mixture layer may be prepared using a cross-section polisher (CP), a focused ion beam (FIB), and the like.

When the positive electrode mixture layer contains an alkali metal ion or an alkaline earth metal ion, the identification and quantification of that ion may also be done using any of the methods described above.

In the nonaqueous electrolyte secondary battery according to the present disclosure, the components other than the positive electrode are not particularly limited, and components used in known nonaqueous electrolyte secondary batteries may be adopted. Examples of the components of the nonaqueous electrolyte secondary battery will be described below.

### (Negative electrode)

The negative electrode has at least a negative electrode current collector. The negative electrode may or may not have a negative electrode mixture layer. The negative electrode may be a negative electrode at which lithium metal (or lithium alloy) deposits during charging, and the lithium metal (or the lithium alloy) dissolves into the nonaqueous electrolyte during discharging. That is, the nonaqueous electrolyte secondary battery according to the present disclosure may be a lithium-metal secondary battery. In the case of a lithium-ion secondary battery, the negative electrode typically includes a negative electrode mixture containing a negative electrode active material. The negative electrode mixture is supported on the negative electrode current collector, forming a negative electrode mixture layer. The negative electrode mixture layer is formed on a surface of the negative electrode current collector.

Lithium-metal secondary batteries, in which lithium metal deposits on the negative electrode during charging, and the lithium metal dissolves into the nonaqueous electrolyte during discharging, are expected to achieve high capacity superior to lithium-ion batteries. However, in lithium-metal secondary batteries, the heat generation rate when an abnormality occurs is high. This is because the lithium metal at the negative electrode is highly reactive with oxygen released from the positive electrode. On the other hand, in the case where the compound FS is contained uniformly in the positive electrode mixture layer (in other words, in the case where the positive electrode active material particles and the compound FS are mixed in the positive electrode mixture layer), even in lithium-metal secondary batteries, the heat generation in the event of an abnormality can be significantly suppressed, and the heat generation rate is considerably reduced.

It is presumed that a small amount of the compound FS has a function of making uniform the movement of lithium ions from the positive electrode during charging, and in a lithium metal secondary battery, can allow lithium metal to be uniformly deposited on the negative electrode. Thus, the initial charge-discharge efficiency of the secondary battery is also improved.

In lithium metal secondary batteries, 70% or more of the rated capacity is derived from the deposition and dissolution of lithium metal. The movement of electrons at the negative electrode during charging and during discharging is mainly due to the deposition and dissolution of lithium metal at the negative electrode. Specifically, 70 to 100% (e.g., 80 to 100% or 90 to 100%) of the movement of electrons (in another aspect, electric current) at the negative electrode during charging and during discharging is due to the deposition and dissolution of lithium metal. That is, the negative electrode in lithium-metal secondary batteries differs from a negative electrode in which the movement of electrons at the negative electrode during charging and during discharging is mainly due to the absorption and release of lithium ions into and from the negative electrode active material (e.g., graphite).

In a battery in which lithium metal deposits at the negative electrode during charging, the open circuit potential (OCP: open circuit potential) of the negative electrode at full charge is, for example, 70 mV or less, relative to lithium metal (lithium dissolution-deposition potential). Being at full charge refers to a state where, when the rated capacity of the battery is denoted by C, the battery is charged to a state of charge (SOC) of, for example, 0.98×C or more. The open circuit potential (OCP) of the negative electrode at full charge can be measured by disassembling the battery at full charge in an argon atmosphere to take out the negative electrode, and assembling it into a cell for measurement, using lithium metal as a counter electrode. The nonaqueous electrolyte of the cell may be of the same composition as the nonaqueous electrolyte in the disassembled battery.

The negative electrode mixture contains a negative electrode active material as an essential component. The negative electrode mixture may include, as optional components, a binder, a thickener, a conductive material, and the like. For these optional components, the components exemplified as the components of the positive electrode may be used.

The negative electrode mixture layer may be formed by applying a negative electrode slurry of constituent components of the negative electrode mixture dispersed in a liquid medium (dispersing medium), onto a surface of the negative electrode current collector, followed by drying. The applied film after drying may be rolled, as necessary. For the liquid medium, the liquid medium exemplified as the liquid medium of the positive electrode slurry may be used.

### (Negative electrode active material)

The negative electrode active material is selected according to the type of nonaqueous electrolyte secondary battery. An example of the negative electrode active material is a substance capable of absorbing and releasing lithium ions. Examples of such a substance include a carbonaceous material and a Si-containing material. The negative electrode active material may include a Si-containing material, or may be a Si-containing material. As the negative electrode active material, metal lithium, lithium alloy, and the like may be used. The negative electrode may contain the negative electrode active material singly or in combination of two or more kinds.

Examples of the carbonaceous material include graphite, graphitizable carbon (soft carbon), and non-graphitizable carbon (hard carbon). The carbonaceous material may be used singly or in combination of two or more kinds. Graphite is preferred because of its excellent charge-discharge stability and low irreversible capacity. Examples of the graphite include natural graphite, artificial graphite, and graphitized mesophase carbon particles.

Examples of the Si-containing material include elementary Si, silicon alloy, a silicon compound (silicon oxide, etc.), and a composite material including a lithium-ion conducting phase (matrix) and silicon phases dispersed therein. Examples of the silicon oxide include SiOₓ particles. The symbol x is, for example, 0.5 ≤ x < 2, and may be 0.8 ≤ x ≤ 1.6. The lithium-ion conducting phase may be at least one selected from the group consisting of a SiO₂ phase, a silicate phase, and a carbon phase.

### (Negative electrode current collector)

For the negative electrode current collector, a metal foil may be used. The negative electrode current collector may be porous. The material of the negative electrode current collector is not particularly limited, and stainless steel, nickel, nickel alloy, copper, copper alloy, and the like can be used. The negative electrode current collector may be a laminated sheet including a resin film and a metal or alloy, such as stainless steel, nickel, nickel alloy, copper, or copper alloy laminated thereon. Examples of the resin material of the resin film include, but not limited to, polyester such as polyethylene terephthalate (PET) and polybutylene terephthalate (PBT), polyethylene, polypropylene, polyamide, and polyimide.

### (Nonaqueous electrolyte)

The nonaqueous electrolyte contains a solvent (nonaqueous solvent), and a solute dissolved in the solvent. Examples of the solute include a lithium salt. Various additives may be added to the nonaqueous electrolyte.

The nonaqueous electrolyte may be a liquid electrolyte (electrolyte solution), may be a gel electrolyte, and may be a solid electrolyte. The liquid electrolyte is, for example, an electrolyte solution containing a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs the nonaqueous solvent and turns into a gel is used. Examples of the polymer material include fluorocarbon resins, acrylic resins, polyether resins, and polyethylene oxide.

As the inorganic solid electrolyte, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ion and an anion are generated.

Examples of the anion include BF₄⁻, ClO₄⁻, PF₆⁻, CF₃SO₃⁻, CF₃CO₂⁻, imide anions, and an oxalate complex anion. Examples of the imide anions include N(SO₂F)₂⁻, N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and satisfy x+y = 2. The oxalate complex anion may contain boron and/or phosphorus. Examples of the oxalate complex anion include bis(oxalate)borate anion, difluoro(oxalate)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing the dendritic deposition of lithium metal, the nonaqueous electrolyte preferably contains at least an oxalate complex anion, and in particular, desirably contains an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, or halogen-substituted derivatives thereof. The nonaqueous electrolyte may include these nonaqueous solvents singly or in combination of two or more kinds. Examples of the halogen-substituted derivatives include fluorides.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane (DME), diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is, for example, 0.5 mol/L or more and 3.5 mol/L or less. The concentration of the anions in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a coating film on the negative electrode. When a coating film derived from the additive is formed on the negative electrode, the dendrite formation and growth can be easily suppressed. Examples of such an additive include vinylene carbonate, FEC, and vinyl ethyl carbonate (VEC).

### (Separator)

A separator is disposed between the positive electrode and the negative electrode. Preferably, the separator is excellent in ion permeability and has moderate mechanical strength and electrically insulating properties. As the separator, a microporous thin film, a woven fabric, a nonwoven fabric, and the like can be used. Examples of the material of the separator include polyolefins, such as polypropylene and polyethylene, and other resins.

### (Outer body)

In the outer body (battery case), an electrode group and the nonaqueous electrolyte are housed. The outer body is not particularly limited, and a known outer body may be used. The electrode group is constituted of the positive electrode, the negative electrode, and the separator. The electrode group may be configured in any way, and may be of a wound type or a stacked type. A wound electrode group is formed by winding the positive electrode and the negative electrode with the separator interposed therebetween. A stacked electrode group is formed by stacking the positive electrode and the negative electrode with the separator interposed therebetween. The nonaqueous electrolyte secondary battery may be in any form, and may be in a cylindrical, prismatic, coin, button, or laminate shape.

FIG. 1 is a longitudinal sectional view of a cylindrical secondary battery 10 (hereinafter may be simply referred to as a "battery 10") according to the present disclosure. The present disclosure, however, is not limited to the following configuration.

In FIG. 1, the battery 10 includes an electrode group 18, a nonaqueous electrolyte (not shown), and a bottomed cylindrical battery case (metal can) 22 that houses these components. A sealing assembly 11 is crimped onto the opening of the battery case 22 with a gasket 21 therebetween. This seals the interior of the battery 10. The sealing assembly 11 includes an internal pressure-activated type safety valve that interrupts the current when the battery internal pressure rises excessively, and ruptures if necessary. Specifically, the sealing assembly includes a valve body 12 having a thin-walled portion, a metal plate 13, and an annular insulating member 14 interposed between the valve body 12 and the metal plate 13. The valve body 12 and the metal plate 13 are electrically connected to each other at their respective centers. A positive electrode lead 15a extended from a positive electrode 15 is connected to the metal plate 13. Thus, the valve body 12 functions as an external terminal of the positive electrode 15 and also functions as a safety valve. When the battery internal pressure rises, the connection between the valve body 12 and the metal plate 13 is broken, to interrupt the current, and when the thin-walled portion ruptures, the gas is released outside. In this way, the safety is ensured. A negative electrode lead 16a extended from a negative electrode 16 is connected to the inner bottom surface of the battery case 22. An annular groove 22a is formed near the opening end of the battery case 22. A first insulating plate 23 is disposed between one end face of the electrode group 18 and the annular groove 22a. A second insulating plate 24 is disposed between the other end face of the electrode group 18 and the bottom of the battery case 22. The electrode group 18 is formed by winding the positive electrode 15 and the negative electrode 16, with a separator 17 interposed therebetween, into a columnar shape. The outermost layer of the electrode group 18 is constituted of the negative electrode 16 on the winding-finish side. In other words, in the electrode group 18, the outermost layer of the negative electrode 16 is arranged further outside than the outermost layer of the positive electrode 15.

### (Supplementary notes)

The above description discloses the following techniques.

### (Technique 1)

A nonaqueous electrolyte secondary battery, comprising:
a positive electrode, a negative electrode, and a nonaqueous electrolyte, wherein
the positive electrode includes a positive electrode current collector, and a positive electrode mixture layer supported on the positive electrode current collector,
the positive electrode mixture layer contains a positive electrode active material and a fluorine-containing sulfonic acid compound, and
a ratio of a mass of the fluorine-containing sulfonic acid compound, relative to a total mass of the positive electrode active material and the fluorine-containing sulfonic acid compound in the positive electrode mixture layer is 1.5 mass% or less.

### (Technique 2)

The nonaqueous electrolyte secondary battery according to technique 1, wherein the ratio of the mass of the fluorine-containing sulfonic acid compound, relative to the total mass of the positive electrode active material and the fluorine-containing sulfonic acid compound in the positive electrode mixture layer is 0.05 mass% or more.

### (Technique 3)

The nonaqueous electrolyte secondary battery according to technique 1 or 2, wherein
the fluorine-containing sulfonic acid compound includes a sulfonic acid anion represented by a formula (1): R-SO₃⁻,
in the formula (1), R is an alkyl group having 1 to 5 carbon atoms, an alkenyl group having 2 to 5 carbon atoms, or an alkynyl group having 2 to 5 carbon atoms, and
in each of the alkyl group, the alkenyl group, and the alkynyl group, at least one hydrogen atom is substituted by a fluorine atom.

### (Technique 4)

The nonaqueous electrolyte secondary battery according to technique 3, wherein the sulfonic acid anion is a nonafluorobutanesulfonate ion (nonafluorobutanesulfonic acid anion).

### (Technique 5)

The nonaqueous electrolyte secondary battery according to any one of techniques 1 to 4, wherein the fluorine-containing sulfonic acid compound is at least one selected from the group consisting of a fluorine-containing sulfonic acid alkali metal salt and a fluorine-containing sulfonic acid alkaline earth metal salt.

### (Technique 6)

The nonaqueous electrolyte secondary battery according to any one of techniques 1 to 5, wherein the fluorine-containing sulfonic acid compound includes a fluorine-containing sulfonic acid potassium salt.

### (Technique 7)

The nonaqueous electrolyte secondary battery according to technique 5 or 6, wherein a potassium ion content in the positive electrode mixture layer is 0.0005 mass% or more and 0.2 mass% or less.

### (Technique 8)

The nonaqueous electrolyte secondary battery according to any one of techniques 1 to 7, wherein at the negative electrode, lithium metal deposits during charging, and the lithium metal dissolves into the nonaqueous electrolyte during discharging.

### [Examples]

The present disclosure will be more specifically described below with reference to Examples. The present disclosure, however, is not limited to the following Examples.

### (Preparation of positive electrode slurry A1)

A positive electrode slurry A1 was prepared by mixing 99.95 parts by mass of a positive electrode active material (LiNi_{0.9}Co_{0.04}Mn_{0.07}Al_{0.03}O₂), 0.05 parts by mass of potassium nonafluorobutanesulfonate (C₄F₉-SO₃K) serving as a compound FS, 0.6 parts by mass of polyvinylidene fluoride (PVDF) serving as a binder, 0.8 parts by mass of acetylene black (conductive material) serving as a conductive material, and an appropriate amount of NMP (liquid medium) together. The positive electrode active material, the compound FS, the PVDF, and the conductive material are the constituent components of the positive electrode mixture. The compound FS content was 0.05 mass%.

### (Preparation of positive electrode slurry A2)

A positive electrode slurry A2 was prepared in the same manner and under the same conditions as the positive electrode mixture A1, except that the formulation of the positive electrode mixture was changed to 99.9 parts by mass of the positive electrode active material, 0.1 parts by mass of the compound FS (C₄F₉-SO₃K), 0.6 parts by mass of polyvinylidene fluoride (PVDF), and 0.8 parts by mass of acetylene black. The compound FS content was 0.1 mass%.

### (Preparation of positive electrode slurry A3)

A positive electrode slurry A3 was prepared in the same manner and under the same conditions as the positive electrode mixture A1, except that the formulation of the positive electrode mixture was changed to 99.8 parts by mass of the positive electrode active material, 0.2 parts by mass of the compound FS (C₄F₉-SO₃K), 0.6 parts by mass of polyvinylidene fluoride (PVDF), and 0.8 parts by mass of acetylene black. The compound FS content was 0.2 mass%.

### (Preparation of positive electrode slurry A4)

A positive electrode slurry A4 was prepared in the same manner and under the same conditions as the positive electrode mixture A1, except that the formulation of the positive electrode mixture was changed to 99 parts by mass of the positive electrode active material, 1 part by mass of the compound FS (C₄F₉-SO₃K), 0.6 parts by mass of polyvinylidene fluoride (PVDF), and 0.8 parts by mass of acetylene black. The compound FS content was 1 mass%.

### (Preparation of positive electrode slurry A5)

A positive electrode slurry A5 was prepared in the same manner and under the same conditions as the positive electrode mixture A1, except that the formulation of the positive electrode mixture was changed to 98.5 parts by mass of the positive electrode active material, 1.5 parts by mass of the compound FS (C₄F₉-SO₃K), 0.6 parts by mass of polyvinylidene fluoride (PVDF), and 0.8 parts by mass of acetylene black. The compound FS content was 1.5 mass%.

### (Preparation of positive electrode slurry B1)

A positive electrode slurry B1 was prepared in the same manner and under the same conditions as the positive electrode mixture A1, except that the formulation of the positive electrode mixture was changed to 100 parts by mass of the positive electrode active material, 0.6 parts by mass of polyvinylidene fluoride (PVDF), and 0.8 parts by mass of acetylene black. No compound FS was used (compound FS content 0%).

### (Preparation of positive electrode slurry B2)

A positive electrode slurry B2 was prepared in the same manner and under the same conditions as the positive electrode mixture A1, except that the formulation of the positive electrode mixture was changed to 98 parts by mass of the positive electrode active material, 2 parts by mass of the compound FS (C₄F₉-SO₃K), 0.6 parts by mass of polyvinylidene fluoride (PVDF), and 0.8 parts by mass of acetylene black. The compound FS content was 2 mass%.

### <<Examples 1 to 5 and Comparative Examples 1 and 2>>

### (1) Preparation of positive electrode

The aforementioned positive electrode slurry was applied onto a surface of an aluminum foil (positive electrode current collector), to form an applied film, and after the applied film was dried, the applied film was rolled, and cut into a predetermined size. Thus, a positive electrode including the aluminum foil and positive electrode mixture layers formed on both surfaces thereof was prepared. The positive electrodes prepared using the positive electrode slurries A1 to A5 are referred to as positive electrodes A1 to A5, respectively, and the positive electrodes prepared using the positive electrode slurries B1 and B2 are referred to as positive electrodes B1 and B2, respectively.

### (2) Preparation of negative electrode

An electrolytic copper foil (thickness 10 µm) was cut into a predetermined electrode size, and used as a negative electrode.

### (3) Preparation of nonaqueous electrolyte solution

Dimethoxyethane (DME) and a fluorinated ether (1,1,2,2-tetrafluoroethyl 2,2,3,3-tetrafluoropropyl ether) were mixed in a 1:1 volume ratio. To the resultant mixed solvent, LiN(SO₂F)₂(LiFSI) was dissolved at a concentration of 1 mol/L, and LiBF₂(C₂O₄) was further dissolved at a concentration of 0.1 mol/L, to prepare an electrolyte solution.

### (4) Fabrication of secondary battery

A lead was attached to each of the above positive electrode and the negative electrode. Next, the positive electrode and the negative electrode were spirally wound, with a separator interposed between the positive electrode and the negative electrode, to form an electrode group. The electrode group and the above electrolyte solution were housed in a case made of a laminated sheet having an aluminum foil. In this manner, batteries A1 to A5 of Examples having the positive electrodes A1 to A5, and batteries B1 and B2 of Comparative Examples having the positive electrodes B1 and B2 were fabricated.

### <<Comparative Example 3>>

A battery B3 of Comparative Example 3 was fabricated in the same manner as the battery of Comparative Example 1 (i.e., using the positive electrode B1), except that the compound FS (C₄F₉-SO₃K) was dissolved in the electrolyte solution at a concentration of 0.024 mass%. The absolute amount of the compound FS (C₄F₉-SO₃K) contained in the battery B3 was the same as that in the battery A2.

### [Evaluation]

The initial charge-discharge efficiency, the internal resistance, and the safety during heat generation of each battery were measured. The results are shown in Table 1.

### <Charge-discharge efficiency>

In a 25 °C environment, each battery was charged at a constant current equivalent to 0.1It until the battery voltage reached 4.2 V, and continuously charged at a constant voltage of 4.2 V until the current dropped to a value equivalent to 0.01It, to determine a capacity Cc. After charging, the battery was left to rest for 20 minutes, and then discharged at a constant current equivalent to 0.1It until the voltage reached 3.0 V, to determine a discharge capacity Cd. The charge-discharge efficiency (100Cd/Cc (%)) was calculated from the Cc and the Cd.

### <Internal resistance>

In a 25°C environment, the battery was constant-current charged at a current of 0.3It until the voltage reached 4.2 V, and then, constant-voltage charged at a constant voltage of 4.2 V until the current dropped to 0.05It. Subsequently, the battery was discharged at a constant current of 0.3It for 100 minutes, to be in a state of charge (SOC) of 50%.

With respect to the battery at 50% SOC, the voltage values when the battery was discharged for 10 seconds at a current of 0 A, 0.1 A, 0.5 A, and 1.0 A were measured. The relationship between the current values at discharging and the voltage values after 10 seconds was approximated to a straight line by the least squares method. From the absolute value of the slope of the straight line, an internal resistance (ACIR) was calculated. The numerical values in Table 1 are relative values when the evaluation result of the battery B1 is taken as 100, and the lower the numerical value is, the better.

### <Safety during heat generation>

An ARC (Accelerating Rate Calorimeter) test was performed. The battery was charged to 4.3 V at a constant current of 40 mA, and then, inserted into a cylindrical sample container made of stainless steel (SUS304). Using an ARC test apparatus available from NETZSCH K.K., the sample was heated to 300 °C in the heat-wait-search measurement mode. The temperature rise from 110 °C due to the self-heat generation of the battery was measured, and the time taken until the temperature rise rate reached 10 °C/min or higher was measured. The longer this time is, the lower the heat generation rate is, indicating higher safety.

**[Table 1]**

| battery | compound FS content | charge-discharge efficiency | internal resistance | safety |
|---|---|---|---|---|
| | (mass) | (%) | (relative value) | (sec.) |
| A1 | 0.05 | 89.2 | 98 | 556 |
| A2 | 0.1 | 89.2 | 97.3 | 640 |
| A3 | 0.2 | 89.2 | 100.9 | 542 |
| A4 | 1 | 88.5 | 100 | 663 |
| A5 | 1.5 | 88.0 | 102 | 595 |
| B1 | 0 | 88.7 | 100 | 405 |
| B2 | 2 | 87.0 | 120 | 592 |
| B3 | - (in solution) | 88.2 | 117 | 487 |

Table 1 shows that in the case of adding the compound FS to the positive electrode mixture, when the compound FS content was 1.5 mass% or less, the safety in the event of an abnormity can be significantly improved while the internal resistance was maintained low. The results also show that in the case of adding the compound FS to the electrolyte solution, the effect of improving the safety was insufficient.

When the compound FS content was low (e.g., 0.1 mass% or less), the internal resistance rather showed a tendency to decrease. Furthermore, when the compound FS content was 1.5 mass% or less, the charge-discharge efficiency was also improved.

### [Industrial Applicability]

The nonaqueous electrolyte secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing assembly, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: groove, 23: first insulating plate, 24: second insulating plate, 16: negative electrode

## Claims

1. A nonaqueous electrolyte secondary battery, comprising:
a positive electrode, a negative electrode, and a nonaqueous electrolyte, wherein
the positive electrode includes a positive electrode current collector, and a positive electrode mixture layer supported on the positive electrode current collector,
the positive electrode mixture layer contains a positive electrode active material and a fluorine-containing sulfonic acid compound, and
a ratio of a mass of the fluorine-containing sulfonic acid compound, relative to a total mass of the positive electrode active material and the fluorine-containing sulfonic acid compound in the positive electrode mixture layer is 1.5 mass% or less.

2. The nonaqueous electrolyte secondary battery according to claim 1, wherein the ratio of the mass of the fluorine-containing sulfonic acid compound, relative to the total mass of the positive electrode active material and the fluorine-containing sulfonic acid compound in the positive electrode mixture layer is 0.05 mass% or more.

3. The nonaqueous electrolyte secondary battery according to claim 1, wherein
the fluorine-containing sulfonic acid compound includes a sulfonic acid anion represented by a formula (1): R-SO₃⁻,
in the formula (1), R is an alkyl group having 1 to 5 carbon atoms, an alkenyl group having 2 to 5 carbon atoms, or an alkynyl group having 2 to 5 carbon atoms, and
in each of the alkyl group, the alkenyl group, and the alkynyl group, at least one hydrogen atom is substituted by a fluorine atom.

4. The nonaqueous electrolyte secondary battery according to claim 3, wherein the sulfonic acid anion is a nonafluorobutanesulfonate ion (nonafluorobutanesulfonic acid anion).

5. The nonaqueous electrolyte secondary battery according to any one of claims 1 to 4, wherein the fluorine-containing sulfonic acid compound is at least one selected from the group consisting of a fluorine-containing sulfonic acid alkali metal salt and a fluorine-containing sulfonic acid alkaline earth metal salt.

6. The nonaqueous electrolyte secondary battery according to any one of claims 1 to 4, wherein the fluorine-containing sulfonic acid compound includes a fluorine-containing sulfonic acid potassium salt.

7. The nonaqueous electrolyte secondary battery according to claim 6, wherein a potassium ion content in the positive electrode mixture layer is 0.0005 mass% or more and 0.2 mass% or less.

8. The nonaqueous electrolyte secondary battery according to any one of claims 1 to 4, wherein at the negative electrode, lithium metal deposits during charging, and the lithium metal dissolves into the nonaqueous electrolyte during discharging.
